Europäisches Patentamt

**European Patent Office**

Office européen des brevets

(11) Numéro de publication: **0 262 044**
**A1**

(12) **DEMANDE DE BREVET EUROPEEN**

(21) Numéro de dépôt: **87402107.4**

(22) Date de dépôt: **22.09.87**

(51) Int. Cl.4: **D 21 H 1/48**
**D 21 J 7/00**

(30) Priorité: **25.09.86 FR 8613408**
**23.02.87 FR 8702335**

(43) Date de publication de la demande:
**30.03.88 Bulletin 88/13**

(84) Etats contractants désignés:
**AT BE CH DE ES FR GB GR IT LI LU NL SE**

(71) Demandeur: **ARJOMARI-PRIOUX**
**3 rue du Pont-de-Lodi**
**F-75006 Paris (FR)**

(72) Inventeur: **Gerault, Patrice**
**92, rue de la République**
**F-92800 Puteaux (FR)**

**Goguelin, Michel**
**Le Guillermet**
**F-38850 Charavines (FR)**

**Fredenucci, Pierre**
**Villa des Vames**
**F-38850 Charavines (FR)**

(74) Mandataire: **Bertrand, Didier et al**
**Cabinet Beau de Loménie 55, rue d'Amsterdam**
**F-75008 Paris (FR)**

(54) **Procédé papetier et composition pour la fabrication de produits tridimensionnels à base de resine thermoplastique et fibres de renforcement.**

㊷ Fabrication d'une pièce tridimensionnelle à partir d'une suspension aqueuse comportant au moins une résine thermoplastique et des fibres de renforcement, comprenant les étapes suivantes :

a) les éléments de la suspension sont moulés par voie humide dans une forme (1) en une préforme (7) ayant dans les trois dimensions les contours généraux de la pièce finale ;

b) la préforme (7) est ensuite au moins partiellement débarassée de son eau ;

c) la préforme est ensuite préchauffée à une température supérieure au point de fusion de la résine thermoplastique ;

d) la préforme (7) est ensuite moulée sous pression dans sa forme finale dans une presse (10) portée à une température inférieure au point de fusion de la résine thermoplastique.

Fig.1

EP 0 262 044 A1

## Description

## PROCEDE PAPETIER ET COMPOSITION POUR LA FABRICATION DE PRODUITS TRIDIMENSIONNNELS A BASE DE RESINE THERMOPLASTIQUE ET FIBRES DE RENFORCEMENT

La présente invention concerne la fabrication d'une pièce tridimensionnelle à partir d'une suspension aqueuse comportant au moins une résine thermoplastique et des fibres de renforcement. On entend ici par pièce tridimensionnelle une pièce qui n'est pas sensiblement plane mais présente dans l'espace des formes plus ou moins complexes, la pièce étant dans l'ensemble constituée par une paroi d'épaisseur moyenne relativement faible par rapport à la surface de la paroi.

On connaît déjà des matériaux en feuilles papetières tels que ceux décrits dans le document FR-A-2 481 707 et qui, constitués d'une matrice thermoplastique armée de fibres de renforcement, sont destinés à être transformés par moulage-estampage en des pièces de formes complexes.

L'intérêt de ces matériaux, par rapport à d'autres produits obtenus par des procédés classiques de l'industrie plastique, réside dans le fait que les fibres de renforcement, par exemple des fibres de verre, sont, au moment de leur dispersion aqueuse, toutes individualisées et uniformément réparties dans les trois dimensions.

Néanmoins, ces matériaux présentent encore par rapport à l'idéal attendu par l'Homme du métier, certaines limitations :

1 -Leur transformation en pièce finale, c'est-à-dire l'étape postérieure à la fabrication sur machine à papier, s'effectue tout d'abord par préchauffage à une température supérieure à celle du point de fusion de la matrice thermoplastique. Ce préchauffage peut s'effectuer de deux manières:

. soit directement à partir de la quantité nécessaire de feuilles papetières placées entre deux plateaux chauffés.

. soit indirectement à partir de plaques obtenues par densification à chaud des précédentes feuilles papetières, lesdites plaques étant à leur tour préchauffées dans des étuves à rayonnement infra-rouge ou air chaud.

Dans les deux cas, et surtout le second, la dépense énergétique est mauvaise puisqu'on n'exploite pas le fait qu'en fin de séchage, les feuilles papetières sont déjà à une température supérieure à 100°C. D'autre part, des opérations de découpe de feuilles et plaques sont nécessaires.

Enfin, le préchauffage par étuvage impose l'addition de stabilisants thermiques à des taux très supérieurs à ceux couramment suffisants dans les procédés classiques de moulage par injection.

2 - Une fois préchauffée, la quantité de matériau à mouler est transférée dans un moule plus froid où elle est refroidie sous pression.

Si, comme c'est le plus souvent le cas, et l'objectif de ces matériaux, la pièce moulée est complexe, c'est-à-dire qu'elle comporte des nervures, des plans perpendiculaires, alors il est connu de l'Homme du métier que pour remplir totalement le moule, la quantité de matériau chaud doit être déposée dans ce moule sous forme d'une pile de feuilles ou de plaques dont la base a une surface inférieure à la surface projetée dudit moule, et ce afin que, lors de la fermeture du moule, le matériau chaud s'écoule selon tous les plans, dans les moindres reliefs.

Mais obtenir un tel écoulement du matériau non encore refroidi, nécessite d'appliquer des pressions de 100 à 200 bars et donc, dès que les pièces deviennent importantes, il faut disposer de presses hydrauliques de plusieurs milliers de tonnes.

3 - Un autre inconvénient consécutif à cet écoulement du matériau chaud réside dans le fait que si, contrairement à d'autres procédés plastiques, les caractéristiques mécaniques moyennes sont constantes en tous points de la pièce finale, celles-ci demeurent cependant variables selon les trois dimensions car les fibres de renforcement se réorientent lors de l'écoulement.

4 - Une autre limitation, due également à l'écoulement au moulage, consiste en ce que dans des applications où le renfort fibreux pourrait être pour partie constitué de fibres cellulosiques de bas prix par rapport aux fibres synthétiques telles que les fibres de verre, ces fibres cellulosiques ne peuvent être utilisées, car du fait de leur surface spécifique élevée elles augmentent considérablement la viscosité du matériau préchauffé et annihilent ainsi sa capacité d'écoulement.

5 - Un autre problème commun à toutes les techniques de moulage par compression, est que certaines pièces doivent présenter des évidements et que ceux-ci ne peuvent être effectués qu'après moulage, donc par une opération supplémentaire de découpe et avec une perte de matière.

6 - Enfin, pour certaines applications, il est nécessaire que l'une des faces de la pièce finale présente un état de surface particulier.

Pour ce, on peut utiliser une feuille de surface telle que celles décrites dans le document FR-A-2 508 842, mais cette technique nécessite d'une part que ladite feuille soit d'une surface supérieure à la surface développée de la pièce, d'où perte de matière, et d'autre part que l'on dispose en parallèle d'un second poste de préchauffage pour cette feuille de surface.

Le but de la présente invention est de proposer un procédé de fabrication d'une pièce tridimensionnelle à base de résine thermoplastique et de fibres de renforcement, qui ne présente pas les inconvénients précités.

A cet effet, l'invention propose un procédé qui comporte les étapes suivantes :

a) les éléments de la suspension sont moulés par voie humide en une préforme ayant dans les trois dimensions les contours généraux de la pièce finale ;

b) la préforme est ensuite au moins partiellement débarassée de son eau ;

c) la préforme est ensuite préchauffée à une température supérieure au point de fusion de la résine thermoplastique ;

d) la préforme est ensuite moulée sous pression dans sa forme finale dans une presse portée à une température inférieure au point de fusion de la résine thermoplastique.

L'étape de moulage par voie humide peut être réalisée selon la technique papetière traditionnelle par égouttage gravitationnel du mélange à la concentration désirée au travers d'une surface poreuse (notamment un treillis métallique ou tamis), à cette différence près que la surface poreuse est conformée selon la forme à donner à la préforme. L'égouttage est avantageusement favorisé par une différence de pression entre les deux côtés de la paroi poreuse, obtenue par surpression du côté où est amenée la suspension et/ou par dépression du côté d'égouttage. L'étape de moulage peut aussi être réalisée par égouttage antigravitationnel de bas en haut par l'application d'une différence de pression correctement choisie. On peut se reporter au document US-A-4 525 321 dont on incorpore ici l'enseignement par référence : il convient toutefois de remplacer les compositions essentiellement cellulosiques décrites dans ce document par les suspensions conformes à la présente invention

L'étape d'élimination d'eau qui suit le préformage permet de retirer une quantité importante de l'eau contenue dans la préforme moulée que ce soit par une action mécanique (essorage), hydraulique (dépression) ou thermique (séchage), ou une combinaison de ces actions. L'élimination d'eau peut se faire par aspiration de l'eau au travers du moule poreux de préformage. Elle peut aussi se faire par compression et réduit avantageusement de moitié l'épaisseur de la paroi constituant la préforme. L'élimination d'eau peut se faire soit dans le poste de préformage lui-même, soit dans un poste distinct après transfert depuis le poste de préformage ; ce transfert s'opère, dans le cas des préformes moulées de bas en haut, par exemple en déplaçant le moule de préformage jusqu'au poste suivant, la préforme restant "collée" à la toile filtrante du moule par l'application d'une dépression si nécessaire. La préforme est séparée de la toile par suppression de la dépression et/ou passage d'air comprimé. Le poste d'élimination d'eau est lui-même conformé à la configuration générale de la préforme ou d'au moins une face de celle-ci et comporte aussi au moins une surface poreuse ou simplement trouée pour l'expulsion d'eau ; le cas échéant cette surface poreuse peut être celle qui a été utilisée au poste de préformage. En cas d'élimination d'eau par compression, on utilise avantageusement une membrane souple appliquée à la partie supérieure de la préforme, par exemple sous une pression de six bars.

L'étape d'élimination d'eau comporte préférentiellement une opération de séchage vers 90° à 120°C. Cette opération de séchage peut être effectuée au four : à cet effet, la préforme est transférée depuis le premier poste d'élimination d'eau jusqu'audit four ; la cohésion conférée par l'elimination d'eau sous compression permet un transfert de la préforme par ventouses de succion ou tout autre moyen. Il est aussi possible, quand la préforme est suffisamment poreuse d'effectuer le séchage en faisant traverser la préforme par un fluide gazeux chaud, de l'air chaud en général ; le cas échéant cette étape peut être réalisée dans le même support poreux que celui du poste d'élimination d'eau lui-même. Lorsqu'on choisit ce mode de séchage, il est préférable d'avoir limité le pressage lors de l'étape précédente d'élimination d'eau afin de conserver une bonne porosité du matériau. D'autres procédés de séchage peuvent également être utilisés, tels que le séchage dans un moule par contact, le séchage par infrarouge ou par haute fréquence, ainsi que les combinaisons des différents procédés.

Selon un aspect essentiel de l'invention, la préforme est ensuite préchauffée à une température supérieure au point de fusion de la résine thermoplastique, afin de ramollir la préforme en vue de son pressage ultérieur. Par exemple, un préchauffage à une température de l'ordre de 210 à 220°C convient pour une résine de polypropylène. On parle ici de préchauffage parce qu'il précède l'étape de moulage sous pression. Le séchage peut être incoporé au préchauffage ou le précéder. Parmi les divers moyens de préchauffage, on peut citer le chauffage par contact dans un moule chauffant de forme adaptée, le chauffage par haute fréquence, par infrarouges et le passage dans un four soufflant à air chaud et notamment le four à air chaud traversant, ou toutes combinaisons de ces différents procédés.

La préforme est ensuite transférée entre les plateaux d'une presse portée à une température suffisante pour effectuer le moulage définitif de la pièce, qu'il suffit ensuite d'extraire de la presse. A cet effet, la température du moulage final doit être nettement inférieure au point de fusion de la matière thermoplastique de façon à permettre la manipulation de la pièce finale sans déformation à sa sortie du moule. La température peut être de l'ordre de 70 à 80°C pour une pièce à matrice en polypropylène. A la différence des fortes pressions pouvant être exigées pour le moulage-estampage des feuilles connues par le document FR-A-2 481 707 (par exemple 100 bars), la pression n'est selon l'invention que d'une trentaine de bars.

On observera que le procédé de l'invention se distingue du procédé connu par le document US-A-4 525 321 déjà cité, non seulement par la nature des compositions utilisées mais aussi par le fait que ce document ignore l'étape de préchauffage et impose en revanche un moulage à chaud à des températures généralement supérieures à celles de l'invention : les températures préférées sont de 100° à 190°C et sont notamment indispensables à la réticulation des résines thermodurcissables généralement employées pour lier définitivement les fibres de bois.

Il est possible selon le procédé de l'invention d'égoutter dans le moule de préformage une suspension dont la composition varie graduellement ou par étapes. Il est notamment avantageux de faire égoutter à la suite l'une de l'autre et l'une par-dessus l'autre une première composition destinée à former la surface apparente de la pièce finie, puis une seconde composition, destinée à former la couche structurelle de la pièce finie. La préforme obtenue subit ensuite les étapes suivantes inchangées du procédé décrit.

La solution précédente est la solution préférée mais en alternative, on peut préparer séparément deux préformes, l'une destinée à la surface, l'autre au renforcement structurel, et réunir ensuite ces préformes à un stade ultérieur du procédé, soit dès l'étape d'essorage par compression, soit seulement lors du moulage final.

L'invention concerne aussi des compositions spécialement destinées à la mise en oeuvre d'un procédé de moulage par voie humide en une préforme ayant dans les trois dimensions les contours généraux de la pièce finale, et plus spécialement du procédé de l'invention. En effet, quoique les compositions enseignées par le document FR-A-2 481 707 soient généralement satisfaisantes pour la mise en oeuvre du procédé, il est apparu possible de déterminer des compositions encore mieux adaptées à ce procédé.

D'une manière générale, les suspensions destinées à former la partie structurelle de la pièce finale ont la composition suivante (en pourcentage de poids) :

Fibres de liaison        5 - 13
Fibres de renforcement       26 - 34
Résines thermoplastiques       40 - 60
Charges       0 - 40

Par fibres de liaison, on entend les fibres qui, telles les fibres de cellulose ou les fibrilles des pâtes de polyoléfine (cf. le document FR-A-2 481 707), assurent une certaine cohésion des autres éléments de la préparation.

Par fibres de renforcement on entend les fibres minérales (fibres de verre, de carbone, de céramique, laine de roche...) les fibres métalliques (acier inoxydable..) ou certaines fibres synthétiques organiques à haut point de fusion (polyamides aromatiques, polyesters...).

Les fibres utilisées peuvent avoir des longueurs jusque vers 30 mm.

Dans une même composition on peut avoir des fibres de natures différentes et/ou de longueurs et/ou de diamètres différents. Les fibres de verre constituent toutefois le renfort privilégié. Le taux de fibres de renforcement dépend des caractéristiques requises pour le produit final, et la gamme 26-34% correspond à des applications préférées notamment dans le domaine de l'équipement automobile.

Par résine thermoplastique, on entend une résine ou un mélange de résines compatibles entre elles parmi les polyoléfines, les polyamides, les polyesters, les polyphénylène éthers et toutes autres résines thermoplastiques techniques.

Cette matrice thermoplastique est préférentiellement apportée sous forme de poudre dont la granulométrie moyenne est inférieure à 800 micromètres. Elle peut aussi se présenter pour tout ou partie sous forme de fibres coupées d'une longueur inférieure de préférence à environ 6 mm. Le taux choisi de 40-60% permet un excellent moulage de la pièce lors de l'étape finale.

Enfin, les compositions de préforme selon l'invention peuvent en outre comporter des charges minérales, mais il est préférable que le taux global en poids de matière infusible (fibres de renforcement et charges) n'excéde pas 60% de la composition afin que celle-ci demeure bien moulable en la pièce finale.

Il va de soi qu'on pourra ajouter au besoin à la composition les adjuvants papetiers, connus de l'Homme de métier, tels que par exemple les dispersants, les hydrofugeants, les liants et les floculants. Dans le cas où on ajoute des charges minérales ou lorsque la poudre thermoplastique est de granulométrie très fine (inférieure à 100 micromètres notamment), on pourra, en fonction des dimensions de maille de la toile de préformage, ajouter un agent de rétention approprié en tête de la machine.

On pourra prévoir aussi des adjuvants plastiques, à savoir les stabilisants thermiques, les colorants,. les plastifiants, les agents améliorant l'interface fibre-résine et tous autres agents connus de l'Homme de métier pour avoir les qualités plastiques souhaitées.

Selon un aspect particulièrement surprenant de l'invention, on voit que les compositions visées ont un taux de fibres de liaison particulièrement bas : 5 à 13%, ce qui est particulièrement avantageux car ces fibres ne présentent généralement pas d'intérêt pour le produit final. Les pâtes de polyoléfines sont par ailleurs onéreuses, et il est intéressant de les remplacer en tout ou partie par des fibres de cellulose qui, au faible taux envisagé, n'affectent pas sensiblement la moulabilité du produit lors de l'étape finale du procédé (d'autant plus que le passage intermédiaire par une préforme permet de réduire les déformations imposées lors du moulage final pour prendre la configuration définitive de la pièce finie).

La présence de fibres de renforcement, telles que des fibres de verre, conduit à un état de surface qui peut n'être pas celui que requièrent l'aspect visuel exigé pour la pièce finie ou la nature des traitements ultérieurs envisagés (peinture, etc.). Il est avantageux dans ce cas de mettre en place selon le procédé décrit ci-dessus une composition de surface, sensiblement sans fibres de renforcement, ayant la formulation suivante (en pourcentage de poids) :

Fibres de liaison       11 - 20
Résines thermoplastiques       40 - 89
Charges       0 - 40

L'intérêt des charges dans la composition de surface est notamment de contribuer au fini de l'aspect de surface en bouchant les pores éventuels.

D'une manière générale, la composition de surface interviendra pour 5 à 20% en poids de la composition de renfort.

Pour des grammages de produit final de 2500 à 3000 g/m², le grammage propre de la composition de surface est de préférence de 250 à 500 g/m².

Naturellement, on pourrait aussi utiliser selon l'invention des compositions de surface répondant à l'enseignement du document FR-A-2 508 842.

D'autres caractéristiques et avantages ressortiront de la description suivante faite en se référant aux dessins annexés sur lesquels :

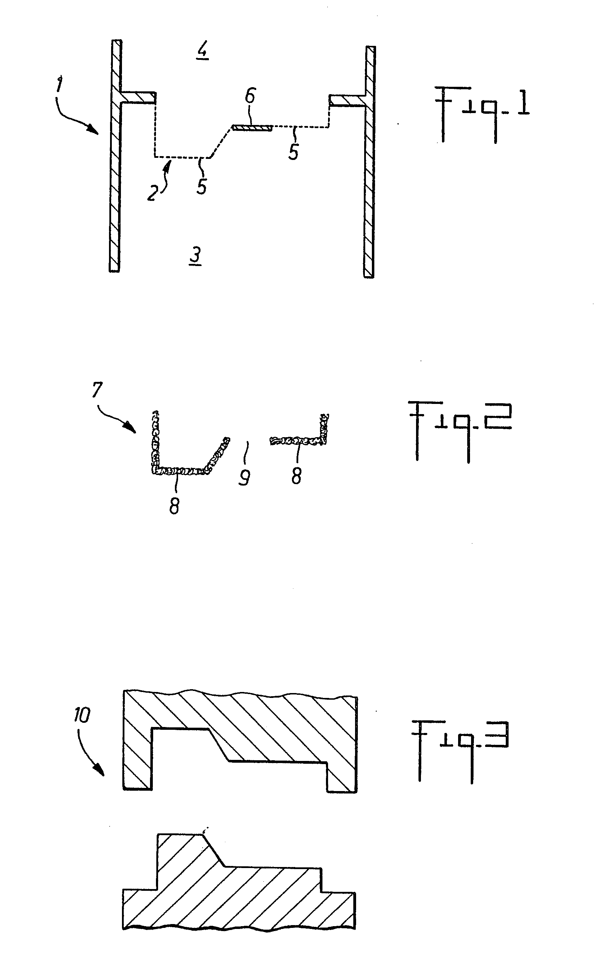

. la figure 1 montre en section transversale schématique une forme utilisable conformément au procédé de l'invention,

. la figure 2 montre en section transversale schématique la préforme obtenue dans la forme de la figure 1,

. la figure 3 montre en coupe transversale schématique un moule utilisé pour densifier la préforme de la figure 2.

La figure 1 montre la forme 1 dans laquelle s'opère selon l'invention l'opération de formage. Cette forme 1 consiste en un support poreux 2 de préforme, séparant une chambre inférieure 3 et une chambre supérieure 4. Le support poreux a, dans les trois dimensions, sensiblement la géométrie générale de la pièce finale. Il comporte essentiellement des parties métalliques poreuses 5 destinées à laisser passer l'eau et à retenir la matière constituant la préforme. Le support peut comporter des parties non poreuses 6, où la matière ne se déposera pas, ce qui entrainera des évidements correspondants dans la préforme. La chambre inférieure 3 est reliée par des moyens non représentés à un ou plusieurs cuviers de suspensions aqueuses. La chambre supérieure 4 est reliée à des moyens non représentés de dépression.

La dispersion aqueuse des divers éléments de la pièce finale (fibres de liaison, fibres de renforcement, résine thermoplastique, adjuvants papetiers et plastiques) est admise dans la chambre inférieure 3 où elle est égouttée par aspiration sous dépression de l'eau au travers des parties poreuses 5 du support. La chambre 3 est calculée de manière que l'intensité d'égouttage soit constante en tous points du support poreux 5. Ainsi le déplacement de matière nécessaire pour assurer le moulage final est très faible si bien que des pressions élevées ne sont plus nécessaires, que des fibres cellulosiques peuvent être mises en oeuvre et que les fibres de renforcement non réorientées conservent dans la pièce finale la parfaite répartition qu'elles ont après égouttage, d'où des caractéristiques constantes dans les trois dimensions. Par ailleurs, le choix d'une dépression de bas en haut permet à la matière de se plaquer sur le support poreux sans que la gravité impose des zones de dépôt préférentielles.

La préforme 7 obtenue après égouttage a la forme représentée en figure 2, avec ses parties pleines 8 et ses évidements 9, après quoi elle est essorée.

Après élimination d'eau, la préforme 7 est chauffée à une température supérieure à la température de fusion de la matrice thermoplastique, par exemple par contact dans un moule de forme adaptée. En variante, la préforme peut être placée sur un support adéquat poreux pour être traversée par un courant d'air chauffé à une température supérieure à la température de fusion de la matrice thermoplastique.

Dans la dernière étape, la préforme chaude 7 est décollée de son support et transférée dans le moule 10 (fig.3) à une température nettement inférieure à celle du préchauffage, moule 10 où, par densification et refroidissement sous pression, elle acquiert la forme définitive de la pièce.

Le support poreux initial et les supports poreux intermédiaires (le cas échéant) doivent avoir la même forme générale que le moule afin de ne pas entraîner de déchirement de la couche de surface lors du moulage.

Les exemples non limitatifs suivants illustrent l'invention.

On a préparé trois suspensions ayant les compositions données dans le tableau en annexe, en mélangeant dans de l'eau contenant un agent dispersant cationique à base d'acide gras les fibres de verre, les fibres cellulosiques, la pâte synthétique, la poudre de polypropylène et un anti-oxydant.

La concentration de ces mélanges arrivant dans le moule de préformage dépend bien entendu du grammagre visé.

Le mélange a été moulé en une préforme ayant la configuration d'un chapeau. La préforme essorée et séchée a été préchauffée à 210°C et pressée 1 minute sous 30 bars à 80°C. Le tableau annexé montre les bonnes caractéristiques mécaniques des produits moulés.

A titre d'illustration, la composition précise complète de l'exemple 2 était :
. eau    76 litres
. agent dispersant "Cartaspers DS1"® commercialisé par SANDOZ    289 g
. pâte à papier "Cariboo"    340 g
. fibres de verre "R18DX9"® commercialisées par OWENS CORNING    2430 g
. pâte synthétique "Pulpex EA"® commercialisée par HERCULES    430 g
. poudre de polypropylène "GY 545M"® commercialisée par IMPERIAL CHEMICAL INDUSTRIES (ICI)    4850 g.

La concentration était de 5,75% et il a été ajouté un antioxydant "TBM 6T"® commercialisé par la Société Française d'Organosynthèse dans une proportion de 0,5% en poids de matières sèches.

Par ailleurs on a essayé avec succès sur l'exemple 2 l'adjonction d'une composition de surface ayant la formulation suivante :
. fibres cellulosiques    11,4%
. pâte synthétique "Pulpex EA"®    7,2%
. poudre de polypropylène "GY 545M"®    81,4%

0 262 044

## TABLEAU

| | Exemple 1 | Exemple 2 | Exemple 3 |
|---|---|---|---|
| **Matières premières** | | | |
| Fibres de verre (a) | 26% | 30,2% | 34% |
| Fibres cellulosiques (b) | 5,4% | 4,3% | 4% |
| Pâte de polyéthylène (c) | 4,6% | 5,3% | 6% |
| Poudre de polypropylène (d) | 64% | 60,2% | 56% |
| Antioxydant | q.s. | q.s. | q.s. |
| Agent dispersant | q.s. | q.s. | q.s. |
| **Propriétés du produit moulé** | | | |
| Densité | 1 | 1,05 | 1,12 |
| Module de flexion (MPa) | 3264 | 3400 | 3502 |
| Contraintes de flexion (MPa) | 75 | 78 | 79 |
| Contraintes de traction (MPa) | 44 | 47 | 50 |
| Taux de cendres | 24 | 29 | 32 |

(a) fibres de verre de longueur 6 mm et de diamètre 11 micromètres
(b) fibres longues d'une pâte à papier (résineux) raffinée à 50° SR
(c) pâte polyéthylène de surface spécifique $10m^2/g$
(d) poudre de granulométrie moyenne de 200 à 350 micromètres

q.s. : quantité suffisante

6

**0 262 044**

## Revendications

1. Procédé de fabrication d'une pièce tridimensionnelle à partir d'une suspension aqueuse comportant au moins une résine thermoplastique des fibres de renforcement, caractérisé en ce qu'il comporte les étapes suivantes :
    a) on prépare une suspension ayant la formulation suivante (en pourcentage de poids) :
- fibres de liaison   5 - 13
- fibres de renforcement   26 - 34
- résine thermoplastique   40 - 60
- charges   0 - 40
    b) les éléments de la suspension sont moulés par voie humide en une préforme ayant dans les trois dimensions les contours généraux de la pièce finale ;
    c) la préforme est ensuite au moins partiellement débarassée de son eau ;
    d) la préforme est ensuite préchauffée à une température supérieure au point de fusion de la résine thermoplastique ;
    e) la préforme est ensuite moulée sous pression dans sa forme finale dans une presse portée à une température inférieure au point de fusion de la résine thermoplastique.

2. Procédé selon la revendication 1, caractérisé en ce que l'étape d'élimination d'eau est effectuée par compression.

3. Procédé selon la revendication 1, caractérisé en ce que l'étape b d'élimination d'eau est effectuée dans le poste de préformage lui-même.

4. Procédé selon l'une quelconque des revendications 1 à 3, caractérisé en ce que l'étape b d'élimination d'eau comporte une opération de séchage.

5. Procédé selon la revendication 4, caractérisé en ce que l'étape de séchage est incorporée dans l'étape de préchauffage.

6. Procédé selon l'une quelconque des revendications 1 à 4, caractérisé en ce que l'étape de préchauffage est obtenue par traversée de fluide gazeux chaud.

7. Procédé selon l'une quelconque des revenditions 1,2,4 à 6, caractérisé en ce qu'il comprend un transfert de la préforme entre l'étape de moulage et celle d'élimination d'eau.

8. Composition papetière spécialement destinée à la mise en oeuvre du procédé selon l'une quelconque des revendications 1 à 7, caractérisée par la formulation suivante (en pourcentage de poids) :
. Fibres de liaison   5 - 13
. Fibres de renforcement   26 - 34
. Résine thermoplastique   40 - 60
. Charges   0 - 40

9. Composition papetière spécialement destinée à la mise en oeuvre d'un procédé de moulage par voie humide en une préforme ayant dans les trois dimensions les contours généraux de la pièce finale, suivi d'un moulage par compression à chaud après séchage et préchauffage, caractérisée par la formulation suivante (en pourcentage de poids) :
. Fibres de liaison   5 - 13
. Fibres de renforcement   26 - 34
. Résine thermoplastique   40 - 60
. Charges   0 - 40

10. Composition papetière spécialement destinée à s'associer en surface à la composition de la revendication 8 ou 9, caractérisée par la formulation suivante (en pourcentage de poids) :
. Fibres de liaison   11 - 20
. Résine thermoplastique   40 - 89
. Charges   0 - 40

7

0262044

Fig.1

Fig.2

Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 271 239 (L. HORNBOSTEL, Jr.) * En entier * --- | 1,3,4,6 | D 21 H 1/48 D 21 J 7/00 |
| A | FR-A-2 276 923 (MITSUI PETROCHEMICAL INDUSTRIES) * Revendications 1-10,13,15-19; exemples 6,7 * --- | 1,3,4,6 -10 | |
| A | FR-A-2 303 655 (UNILEVER) * Revendications 1-4,7,10; exemples 1,2 * --- | 1-6 | |
| A | EP-A-0 039 292 (ARJOMARI-PRIOUX) * Revendications 1-4 * & FR-A-2 481 707 (Cat. D,A) --- | 8,9 | |
| A | EP-A-0 069 650 (ARJOMARI-PRIOUX) * Revendication * & FR-A-2 508 842 (Cat. D,A) --- | 10 | |
| A | FR-A-2 187 992 (WIGGINS TEAPE RESEARCH & DEVELOPMENT) - --- | | DOMAINES TECHNIQUES RECHERCHES (Int. Cl.4) |
| A | US-A-4 376 675 (K.A. PERROTTA) --- | | B 27 N D 21 H D 21 J |
| A | FR-A-1 173 809 (ISOLATIE GRONDSTOFFEN INDUSTRIE) --- | | |
| A | FR-A- 951 617 (AMERICAN VISCOSE) --- | | |
| A | US-A-1 566 165 (W.G. O'BRIEN) --- | | |
| A | FR-A-2 294 378 (MITSUI PETROCHEMICAL INDUSTRIES) ----- | | |

Le présent rapport a été établi pour toutes les revendications

| Lieu de la recherche | Date d'achèvement de la recherche | Examinateur |
|---|---|---|
| LA HAYE | 09-11-1987 | NESTBY K. |